# EUROPEAN PATENT APPLICATION

(11) **EP 2 479 883 A2**
(43) Date of publication of application: **25.07.2012**
(21) Application number: 12150773.5
(22) Date of filing: 11.01.2012
(51) Int. Cl.: H02P 6/14

(54) **Driving apparatus of sensorless brushless motor**

(30) Priority: 19.01.2011 JP 2011009150
(71) Applicant: Aisin Seiki Kabushiki Kaisha, Aichi 448-8650 (JP)
(72) Inventor: Otokawa, Masaya, Kariya-shi, Aichi 448-8650 (JP); Eihata, Koma, Kaiya-shi, Aichi 448-8650 (JP); Saiki, Koichi, Kariya-shi, Aichi 448-8650 (JP)
(74) Representative: Kramer - Barske - Schmidtchen

(57) **Abstract**

A driving apparatus (1, 10, 11) of a sensorless brushless motor (9, 90) includes an inverter circuit (2) supplying a power supply voltage (Vcc) to three phase terminals (95U, 95V, 95W) of three phase armature windings (92, 93, 94) of the sensorless brushless motor provided with a stator (91) and with a rotor (100) including a pair of magnetic poles (S, N), a PWM generator circuit (5) generating a pulse-width modulation signal (SP), a position detection circuit (3, 30, 300) operating at a particular phase of the pulse-width modulation signal, detecting an induced voltage (VUi, VVi, VWi) induced at the terminal that is in a non-energization time zone and detecting a rotational position of the rotor, an inverter control circuit (4) determining an energization time zone and transmitting an energization control signal (SC) to the inverter circuit, and a PWM delay circuit (6, 60) generating a pulse-width modulation signal (SPD) for position detection by delaying the pulse-width modulation signal, wherein the position detection circuit operates at a particular phase of the pulse-width modulation signal for position detection.

## Description

### TECHNICAL FIELD

This disclosure generally relates to a driving apparatus of a sensorless brushless motor.

### BACKGROUND DISCUSSION

As one type of a direct current brushless motor, a known sensorless-type motor, which is not provided with a sensor detecting a rotational position of a rotor, is practically in use. The known sensorless brushless motor is provided with a position detection circuit for detecting a rotational position of the rotor relative to a pair of magnetic poles by detecting an induced voltage generated at a terminal of an armature winding of a stator of the motor during a non-energization time zone. On the basis of the detected rotational position of the rotor, a power control device determines an energization time zone where a power supply voltage is supplied to the armature winding. A power supply circuit, which is typically configured by an inverter circuit, supplies the power supply voltage to the armature winding in accordance with the determined energization time zone so that the armature winding is energized. A motor having three phase armature windings often employs a driving method where the terminals are sequentially energized in turn at a pitch of an electrical angle of 120 degrees in accordance with the rotational position of the rotor. In this driving method, the energization time zone may exceed the electrical angle of 120 degrees and may be overlapped with plural phases. In addition, in most cases, the power supply circuit is controlled by a pulse-width modulation (PWM) method so that a duty ratio is variable in order to adjust an output torque.

The induced voltage, which is detected by the position detection circuit as described above, is generated by a magnetic flux interlinkage between the pair of magnetic poles of the rotor and the armature winding that is in a non-energization time zone. Accordingly, the induced voltage changes depending on a relative rotational position of the armature winding and the rotor, and thus the induced voltage may be an index for detecting the rotational position. However, the phase at which the induced voltage is generated sequentially changes as the terminals are sequentially energized in turn. As a circuit system for detecting the induced voltage, a three-phase combined type circuit system and a three-phase independent type circuit system are conventionally applied. Generally, in both circuit systems, the induced voltage is compared to a reference voltage by means of a comparator and a reference rotational position of the rotor is detected at a timing when the comparison result changes. An intermediate level value, which is half the value of the power supply voltage, or a neutral point voltage of the armature windings connected to one another in a Y-connection is applied as the reference voltage.

An example of the position detection device of the above-described type, which is applied to the sensorless brushless motor, is disclosed in JPH7-222487A (hereinafter referred to as Patent reference 1). A driving apparatus of the brushless motor disclosed in the Patent reference 1 is configured to include a low-pass filter circuit between terminals of stator windings (armature windings) and a control means, a smoothing circuit between a neutral point of the stator windings connected to one another in the Y-connection and the control means, and a comparator provided in the control means. Accordingly, the induced voltages generated at the terminals are appropriately detected by removing a PWM signal, which is a high frequency component, in the low-pass filter circuit. On the other hand, due to a function of the smoothing circuit, an electric potential at the neutral point always refers to a reference voltage at a center of a detection signal, and thus the control means may obtain a correct signal for the position detection.

However, in a sensorless brushless motor, in case that a rotation speed of the rotor is controlled to be low, the change in the magnetic flux that interlinks with the stator winding is reduced, and thus an absolute value of the induced voltage is reduced. In addition, because a duty ratio of a PWM control is controlled to be small, a duration of time in which the induced voltage is generated at the terminal becomes small so as to coincide with an on-duty period. Due to a synergistic action of the above-described two factors, an output of the low-pass filter circuit becomes extremely low, and thus, an accurate detection of the rotational position may be difficult according to the driving apparatus disclosed in the Patent reference 1.

On the contrary, according to a known configuration where the low-pass filter circuit is not included, the induced voltage is not extremely reduced even though the rotation speed of the rotor decreases. However, the induced voltage presents an intermittent waveform which includes only the on-duty period and whose duration of time is short. Accordingly, the comparison result outputted from the comparator also includes an intermittent waveform, and the position may be detected provided that the output from the comparator is read out at an appropriate timing. The timing at which the output from the comparator is read out in the position detection circuit is normally a falling phase of the pulse-width modulation signal, that is, a time of completion of the on-duty period. This is because an inverter control circuit and an inverter circuit include a transmission delay time, and thus the above-described timing is appropriate for reading out the changes in the output, which occurs at the comparator during the on-duty period that delays by the transmission delay time.

However, even in the configuration not including the low-pass filter circuit, the rotational position is no longer be detected in case that the duty ratio extremely decreases at a low speed range, and thus the on-duty period becomes shorter than the transmission delay time. This is because an entire duration of the on-duty period at the comparator is delayed and comes after the falling phase of the pulse-width modulation signal, and there exists substantially no timing at which the output of the comparator is read out in the position detection circuit.

A need thus exists for a driving apparatus of a sensorless brushless motor, which reliably detects a rotational position of a rotor even when the number of rotations of the rotor is low, and thus which is drivable at a lower number of rotations than a known driving apparatus of a sensorless brushless motor.

### SUMMARY

According to an aspect of this disclosure, a driving apparatus of a sensorless brushless motor includes an inverter circuit supplying a power supply voltage, of which duty ratio is variable by a pulse-width modulation method, to three phase terminals of three phase armature windings of the sensorless brushless motor provided with a stator including the three phase armature windings and with a rotor including a pair of magnetic poles, a PWM generator circuit generating a pulse-width modulation signal including a duty ratio corresponding to a commanded duty ratio or corresponding to a commanded number of rotations of the motor, a position detection circuit operating at a particular phase of the pulse-width modulation signal, detecting an induced voltage induced at the terminal that is in a non-energization time zone in which the power supply voltage is not supplied from the inverter circuit to the terminal, and detecting a rotational position of the rotor on the basis of the detected induced voltage, an inverter control circuit determining an energization time zone in which the power supply voltage is supplied to the terminal of each phase on the basis of the rotational position of the rotor which is detected by the position detection circuit, and transmitting an energization control signal which is on the basis of the energization time zone and of the pulse-width modulation signal to the inverter circuit, and a PWM delay circuit generating a pulse-width modulation signal for position detection by delaying the pulse-width modulation signal on the basis of a transmission delay time in the inverter control circuit and in the inverter circuit, wherein the position detection circuit operates at a particular phase of the pulse-width modulation signal for position detection.

According to the above described structure, the driving apparatus of the sensorless brushless motor includes the inverter circuit, the PWM generator circuit, the position detection circuit and the inverter control circuit. The driving apparatus further includes the PWM delay circuit generating the pulse-width modulation signal for position detection by delaying the pulse-width modulation signal in accordance with the transmission delay time. The position detection circuit operates at the particular phase of the pulse-width modulation signal for position detection. In other words, an operation timing of the position detection circuit is delayed by an amount of delay of the pulse-width modulation signal for detection relative to the pulse-width modulation signal. On the other hand, the induced voltage, which is induced at the terminal that is in the non-energization time zone, is generated in an on-duty period that is delayed by the transmission delay time in the inverter control circuit and in the inverter circuit. Here, the amount of delay and the transmission delay time correspond to each other, and thus the position detection circuit operates in a timely manner within the on-duty period in which the induced voltages are generated. Consequently, the position detection circuit detects the rotational position of the rotor even though the duty ratio is decreased and the on-duty period is shortened at low rotation speeds, and therefore the position detecting portion reliably detects the rotational position of the rotor. Thus, the driving apparatus of the sensorless brushless motor may be driven at a lower number of rotations of the rotor.

According to another aspect of this disclosure, the amount of delay of the pulse-width modulation signal for position detection in the PWM delay circuit substantially coincides with the transmission delay time of the induced voltage relative to the pulse-width modulation signal.

According to the above described structure, the position detecting portion operates immediately before the completion of the on-duty period during which the induced voltage is generated, and thus the rotational position of the rotor is reliably detected until the duty ratio approaches zero. Consequently, the driving apparatus of the sensorless brushless motor of the embodiments may drive the motor at a lower number of rotations than a known driving apparatus of the sensorless brushless motor.

According to a further aspect of this disclosure, the position detection circuit includes a filter portion at an input side of the position detection circuit, to which the induced voltage is inputted, and the PWM delay circuit generates the pulse-width modulation signal for position detection which includes a consideration of a transmission delay time at the filter portion.

According to the above described structure, in case that the filter portion is provided in order to, for example, restrict ripples or noise included in the induced voltages, the operation timing of the position detection circuit is appropriately regulated in consideration of a transmission delay time in the filter portion. Thus, the rotational position of the rotor is reliably detected even in case that the duty ratio is decreased.

According to a further aspect of this disclosure, the amount of delay of the pulse-width modulation signal for position detection in the PWM delay circuit is set to be variable.

The transmission delay time may vary depending on, for example, characteristics of the inverter circuit, including a rating and a specification thereof, and depending on conditions of a body of the motor. The transmission delay time in the filter portion at the input side of the position detection circuit may also vary. Therefore, according to the above described structure, by setting the amount of delay to be variable, one type of PWM delay circuit may respond to the above-described variations.

According to a further aspect of this disclosure, a falling phase of the pulse-width modulation signal of the PWM generator circuit controls a falling timing of the power supply voltage, and the position detection circuit operates at a falling phase of the pulse-width modulation signal for position detection.

In other words, the falling phase of the PWM signal for position detection refers to a completion of an on-duty period. The position detection circuit operates in an on-duty period of the induced voltage that is generated while including the delay relative to the PWM signal for position detection, and reliably detects the rotational position of the rotor.

According to a further aspect of this disclosure, the inverter control circuit transmits, to the inverter circuit, the energization control signal including a consideration of an angle of advance for compensating a transmission delay time in the inverter circuit and in the position detection circuit in addition to a consideration of the energization time zone and the pulse-width modulation signal.

According to the above described structure, the driving apparatus of the sensorless brushless motor may be used in combination with the inverter control circuit that controls the angle of advance, thereby obtaining similar effects to those above-described. In addition, a timing of the energization time zone may be appropriately regulated by adjusting the angle of advance, and thus an adequate efficiency of the motor may be obtained.

According to a further aspect of this disclosure, a square waveform of the pulse-width modulation signal for position detection has an identical shape to a shape of a waveform of the pulse-width modulation signal and includes the amount of delay relative to the pulse-width modulation signal.

According to a further aspect of this disclosure, the amount of delay is an amount obtained by adding the transmission delay time of the induced voltage relative to the pulse-width modulation signal to the transmission delay time in the filter portion.

According to a further aspect of this disclosure, the filter portion is a low-pass filter.

According to a further aspect of this disclosure, the three phase armature windings are connected to one another in a delta connection.

According to a further aspect of this disclosure, the three phase armature windings are connected to one another in a Y-connection.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a view illustrating an entire configuration of a driving apparatus of a sensorless brushless motor of a first embodiment disclosed here;

Fig. 2 is a table describing a method for controlling an energization time zone and a non-energization time zone of the sensorless brushless motor by means of an inverter control circuit of the driving apparatus according to the first embodiment;

Fig. 3 is a view illustrating a voltage waveform generated at a terminal of each phase by the control described in Fig. 2;

Fig. 4 is a view describing an operation for detecting a reference rotational position of the rotor on the basis of the voltage waveform of each portion of the driving apparatus of the first embodiment before and after a point that corresponds to electrical angle of 30 degrees in Fig. 3;

Fig. 5 is a view describing an operation for detecting a reference rotational position of a rotor on the basis of a voltage waveform of each portion according to a known driving apparatus;

Fig. 6 is a view describing the operation for detecting the reference rotational position of the rotor according to the first embodiment in case that a duty ratio is decreased;

Fig. 7 is a view describing the operation of the known driving apparatus where the reference rotational position of the rotor is not detected in case that a duty ratio is decreased;

Fig. 8 is a view illustrating an entire configuration of a driving apparatus of a sensorless brushless motor of a second embodiment disclosed here; and

Fig. 9 is a view illustrating an entire configuration of a driving apparatus of a sensorless brushless motor of a third embodiment disclosed here.

### DETAILED DESCRIPTION

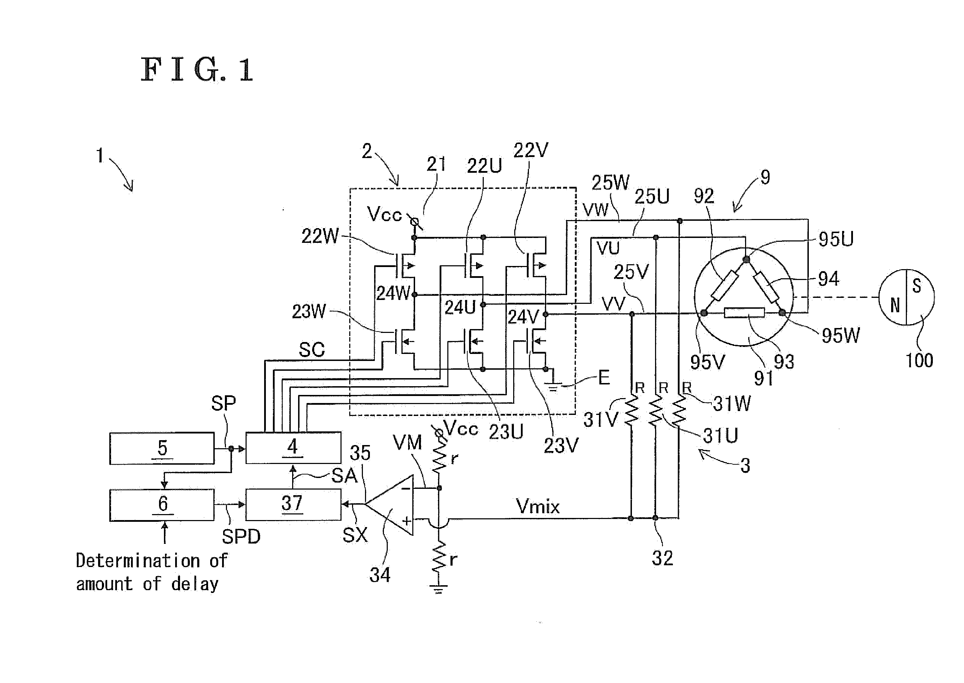

A configuration and a driving operation of a driving apparatus of a sensorless brushless motor according to a first embodiment will be described with reference to Figs. 1 to 4 and 6. A driving apparatus 1, whose configuration is illustrated in Fig. 1, actuates a sensorless brushless motor 9 by using an inverter circuit 2 in which a duty ratio of a power supply voltage is variable by a pulse-width modulation (PWM) method (the pulse-width modulation will be hereinafter referred to as PWM).

The sensorless brushless motor 9 is provided with a stator 91 including three phase armature windings 92, 93, 94 (i.e., a UV armature winding 92, a VW armature winding 93 and a WU armature winding 94) connected to one another in a delta connection and a rotor 100 including a pair of magnetic poles S, N, however, the sensorless brushless motor 9 does not include a sensor for detecting a rotational position of the rotor 100. The stator 91 includes a U-phase terminal 95U, a V-phase terminal 95V and a W-phase terminal 95W (i.e., three phase terminals). The UV armature winding 92 is connected to the U-phase terminal 95U and to the V-phase terminal 95V so as to be positioned between the U-phase terminal 95U and the V-phase terminal 95V, the VW armature winding 93 is connected to the V-phase terminal 95V and to the W-phase terminal 95W so as to be positioned between the V-phase terminal 95V and the W-phase terminal 95W, and the WU armature winding 94 is connected to the W-phase terminal 95W and to the U-phase terminal 95U so as to be positioned between the W-phase terminal 95W and the U-phase terminal 95U. According to the first embodiment, there is no limitation on the number of the armature windings 92, 93, 94 of the stator 91 or the number of the pairs of magnetic poles S, N of the rotor 100.

The driving apparatus 1 is constituted by the inverter circuit 2, a position detection circuit 3, an inverter control circuit 4, a PWM generator circuit 5 and a PWM delay circuit 6. The inverter circuit 2 includes an input terminal 21 and a ground terminal E, to both of which a DC power supply is connected so that a power supply voltage Vcc is supplied to the inverter circuit 2.

As shown in Fig. 1, the inverter circuit 2 is configured to include three phase bridges. A U-phase power supply-side switching element 22U and a U-phase ground-side switching element 23U are serially connected to each other, and a U-phase output terminal 24U is interposed between the switching elements 22U and 23U. In a similar manner, a V-phase power supply-side switching element 22V and a V-phase ground-side switching element 23V are serially connected to each other, and a V-phase output terminal 24V is interposed between the switching elements 22V and 23V, and a W-phase power supply-side switching element 22W and a W-phase ground-side switching element 23W are serially connected to each other, and a W-phase output terminal 24W is interposed between the switching elements 22W and 23W. For each switching element 22U, 22V, 22W, 23U, 23V, 23W, for example, a field effect transistor (FET) may be used. Thus, the inverter circuit 2 is configured to controllably switch between a conducting state and a cutoff state in accordance with an energization control signal SC. The output terminals 24U, 24V, 24W are connected to the terminals 95U, 95V, 95W of the stator 91 via power lines 25U, 25V, 25W, respectively.

Each of the U-phase terminal 95U, the V-phase terminal 95V and the W-phase terminal 95W of the stator 91 transits among three states as the switching elements 22U, 22V, 22W, 23U, 23V, 23W of the inverter circuit 2 are controlled to open and close. The three states will be described in an example of the U-phase terminal 95U because the three states are identical among the U-, V- and W-phases. The U-phase terminal 95U is tied to the power supply voltage Vcc when the U-phase power supply-side switching element 22U is in the conducting state and the U-phase ground-side switching element 23U is in the cutoff state. The U-phase terminal 95U is tied to a zero voltage when the U-phase power supply-side switching element 22U is in the cutoff state and the U-phase ground-side switching element 23U is in the conducting state. The U-phase terminal 95U is in a high-impedance state when the U-phase power supply-side switching element 22U and the U-phase ground-side switching element 23U are in the cutoff state.

When the U-phase terminal 95U is in the high-impedance state, a U-phase induced voltage VUi is generated at the U-phase terminal 95U. The U-phase induced voltage VUi is generated when a magnetic flux from the pair of magnetic poles S, N of the rotor 100 interlinks with the UV armature winding 92 and with the WU armature winding 94 both of which are connected to the U-phase terminal 95U. Accordingly, the U-phase induced voltage VUi changes depending on rotational positions of the UV armature winding 92 and the WU armature winding 94 relative to the rotor 100, and thus the U-phase induced voltage VUi may be an index for detecting the rotational position of the rotor 100. The U-phase power supply-side switching element 22U and the U-phase ground-side switching element 23U are controlled not to be in the conducting state at the same time, thereby preventing a short-circuit failure of the power supply voltage.

The position detection circuit 3 is configured by three phase combined resistances 31 U, 31V, 31W, a comparator 34 and a position detecting portion 37. Resistance values R of the combined resistances 31U, 31V, 31W are equal to one another. The combined resistances 31 U, 31V, 31W are positioned between the power lines 25U, 25V, 25W and a combined point 32, which is the common combined point among the combined resistances 31 U, 31V, 31W, respectively. In other words, the three phase combined resistances 31 U, 31V, 31 W are connected to one another in a Y-connection and the combined point 32 serves as a neutral point of the Y-connection. As will be described in detail later, the U-phase induced voltage VUi, a V-phase induced voltage VVi and a W-phase induced voltage VWi are combined, and thus a composite voltage Vmix is generated at the combined point 32. The U-phase induced voltage VUi, the V-phase induced voltage VVi and the W-phase induced voltage VWi are the induced voltages generated at the terminals 95U, 95V, 95W of the stator 91, respectively. The combined point 32 is connected to a positive side input terminal + of the comparator 34, to which the composite voltage Vmix is inputted.

On the other hand, an intermediate level value VM (=Vcc/2) is inputted as a reference voltage to a negative side input terminal - of the comparator 34. The intermediate level value VM is obtained by dividing the power supply voltage Vcc of the DC power supply into two by means of two resistances whose resistance values r, r are equal to each other. The comparator 34 compares a magnitude of the composite voltage Vmix inputted to the positive side input terminal + of the comparator 34 relative to a magnitude of the intermediate level value VM inputted to the negative side input terminal - thereof, and outputs a position signal SX. The position signal SX is a low level L in case that the composite voltage Vmix is smaller than the intermediate level value VM and the position signal SX is a high level H in case that the composite voltage Vmix is equal to or greater than the intermediate level value VM at an output terminal 35 of the comparator 34. The output terminal 35 of the comparator 34 is connected to the position detecting portion 37, to which the position signal SX is inputted.

As will be described in detail later, the position detecting portion 37 operates at a particular phase, for example, at a falling phase of a pulse-width modulation signal SPD for position detection (i.e., PWM signal for position detection). The position detecting portion 37 receives, as an input, the position signal SX of the comparator 34 and detects a reference rotational position of the rotor 100 at a timing of change between the high level H and the low level L of the position signal SX. The position detecting portion 37 also detects a rotation speed of the rotor 100 on the basis of a time difference among times at which the plural reference rotational positions are detected.

The PWM generator circuit 5 generates a pulse-width modulation signal SP (i.e., PWM signal) having a square wave. A PWM frequency of the PWM signal SP may be a fixed value or may be controlled to be variable. A duty ratio of the PWM signal SP follows a command given by an external device (that is, a commanded duty ratio) or is derived inside the PWM generator circuit 5 in accordance with a command on the number of rotations of the motor 9 (that is, a commanded number of rotations of the motor). In the latter case, a relationship between the number of rotations of the motor 9 and the duty ratio is grasped in advance. For example, a positive correlation, where the duty ratio is increased so that the number of rotations of the motor 9 is increased in case that inertia of a load of the motor 9 is constant, is obtained in advance. The PWM signal SP is transmitted to the inverter control circuit 4 and to the PWM delay circuit 6.

The inverter control circuit 4 obtains a signal SA of the reference rotational position and the rotation speed of the rotor 100 which is detected at the position detecting portion 37 of the position detection circuit 3, and obtains the PWM signal SP from the PWM generator circuit 5. In accordance with the obtained signals, the inverter control circuit 4 determines and transmits the energization control signal SC for controlling the switching elements 22U, 22V, 22W, 23U, 23V, 23W of the inverter circuit 2 to open and close.

The PWM delay circuit 6 generates the PWM signal SPD for position detection. The PWM delay circuit 6 obtains the PWM signal SP from the PWM generator circuit 5 and generates the PWM signal SPD for position detection by delaying the obtained PWM signal SP by an amount of delay ΔT1 which is preliminary determined. The amount of delay ΔT1 is set to be variable. Specifically, the amount of delay ΔT1 is set so as to substantially coincide with a transmission delay time ΔT2 of the induced voltages VUi, VVi, VWi relative to the PWM signal SP. The PWM signal SPD for position detection is transmitted to the position detecting portion 37 of the position detection circuit 3.

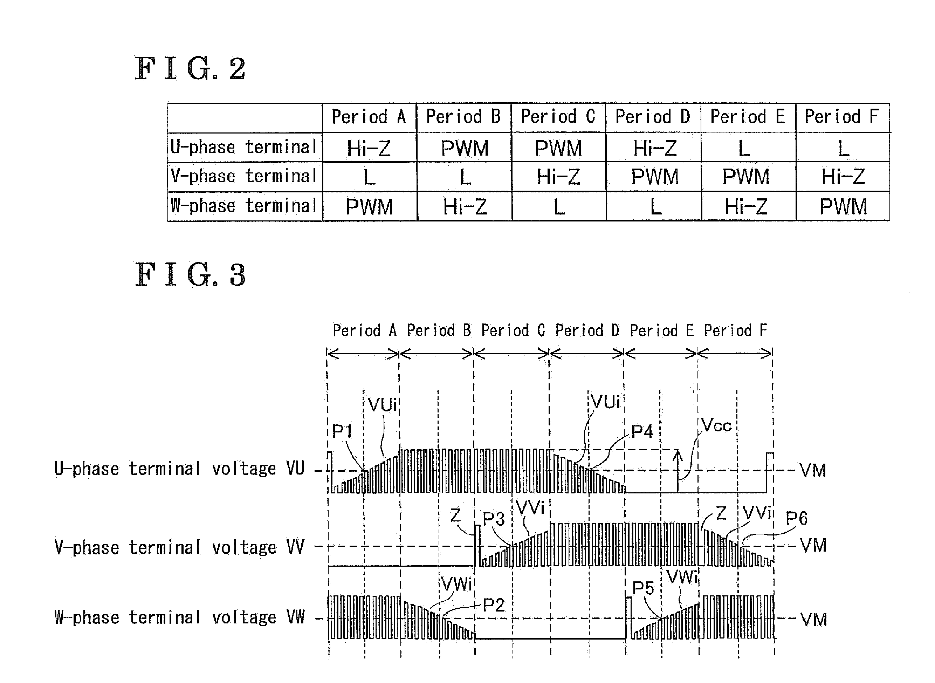

Next, the driving operation of the motor 9 by the driving apparatus 1 for the sensorless brushless motor according to the first embodiment, which has the above-described configuration, will be described. Fig. 2 is a table describing a method for controlling an energization time zone and a non-energization time zone of the sensorless brushless motor 9 by means of the inverter control circuit 4 (that is, the inverter control circuit 4 determines the energization time zone) according to the driving apparatus 1 of the first embodiment. As shown in Fig. 2, the inverter control circuit 4 conducts a state control of each terminal 95U, 95V, 95W during six periods including a period A to a period F. In the table in Fig. 2, the first row indicates the six periods, and each column indicates a state of each terminal 95U, 95V, 95W during each period. In the table, "Hi-Z" indicates the high-impedance state, "L" indicates a zero voltage-restriction state, and "PWM" indicates a PWM control state.

In this specification, a period of time, during which a power supply voltage is supplied, of one cycle of a PWM frequency is referred to as an on-duty period. Among plural on-duty periods over approximately 120 degrees of an electrical angle, a period of time in which the power supply voltage is continuously supplied to a particular phase is referred to as an energization time zone. Usually, the on-duty period is extremely shorter than the energization time zone.

For example, during the period A, the row of the U-phase terminal is marked with "Hi-Z", which indicates that the U-phase power supply-side switching element 22U and the U-phase ground-side switching element 23U, both of which are included in the inverter circuit 2, are in the cutoff state, and therefore the U-phase terminal 95U is in the high-impedance state. During the period A, the row of the V-phase terminal is marked with "L", which indicates that the V-phase power supply-side switching element 22V of the inverter circuit 2 is in the cutoff state and the V-phase ground-side switching element 23V of the inverter circuit 2 is in the conducting state, and therefore the V-phase terminal 95V is tied to the zero voltage, that is, in the zero voltage-restriction state. During the period A, the row of the W-phase terminal is marked with "PWM", which indicates that the W-phase ground-side switching element 23W of the inverter circuit 2 is in the cutoff state, and the W-phase power supply-side switching element 22W of the inverter circuit 2 is controlled to switch between the conducting state and the cutoff state at a commanded PWM frequency and a commanded duty ratio. Thus, square waves oscillating between the power supply voltage Vcc and the zero voltage are generated at the W-phase terminal 95W. Consequently, the VW armature winding 93 connected to the W-phase terminal 95W and to the V-phase terminal 95V so as to be positioned between the W-phase terminal 95W and the V-phase terminal 95V is energized under the PWM control. Further, the period A refers to the non-energization time zone of the U-phase terminal 95U, and thus the U-phase induced voltage VUi may be detected during the period A.

In a similar manner to that described above, during the period B, the row of the U-phase terminal is marked with "PWM", and thus the square waves, which oscillate between the power supply voltage Vcc and the zero voltage at the commanded PWM frequency and the commanded duty ratio, is generated at the U-phase terminal 95U. During the period B, the row of the V-phase terminal is marked with "L", which indicates that the V-phase terminal 95V remains being tied to the zero voltage. During the period B, the row of the W-phase terminal is marked with "Hi-Z", which indicates that the W-phase terminal 95W is in the high-impedance state. Consequently, the UV armature winding 92 connected to the U-phase terminal 95U and to the V-phase terminal 95V so as to be positioned between the U-phase terminal 95U and the V-phase terminal 95V is energized under the PWM control. Further, the period B refers to the non-energization time zone of the W-phase terminal 95W, and thus the W-phase induced voltage VWi may be detected during the period B. Similarly, during the periods C to F, the states of the terminals 95U, 95V, 95W, the armature winding to be energized, and the phase at which the induced voltage may be detected are controlled so as to be sequentially altered.

Because each period A to F corresponds to an electrical angle of 60 degrees, the inverter control circuit 4 controls the switching elements 22U, 22V, 22W, 23U, 23V, 23W of the inverter circuit 2 so that the periods A to F have equal periods of time to one another. The control returns to the period A after the period F, and thus the periods A to F are sequentially repeated in the similar way.

In a state where the energization time zone and the non-energization time zone of the sensorless brushless motor 9 are controlled as shown in Fig. 2, terminal voltage waveforms, examples of which are shown in Fig. 3, are generated. In Fig. 3, the time advances in the horizontal direction from left to right, the periods A to F correspond to those shown in Fig. 2, and the waveforms show a U-phase terminal voltage VU, a V-phase terminal voltage VV and a W-phase terminal voltage VW from top to bottom. In Fig. 3, related to the U-phase terminal voltage VU, the square waveforms repetitively occurring during the periods B and C indicate the energization time zone caused by the PWM control, and the periods E and F indicate the energization time zone caused by the zero voltage-restriction. The waveforms which appear in the U-phase terminal voltage VU during the periods A and D indicate the U-phase induced voltage VUi generated at the U-phase terminal 95U when the U-phase terminal 95U is in the non-energization time zone. In the waveform appearing during period A, an increasing inclination and the waveform generated due to the PWM control are overlapped with each other, and in the waveform appearing during period D, a decreasing inclination and the waveform generated due to the PWM control are overlapped with each other. In Fig. 3, a similar explanation applies to the V-phase terminal voltage VV and to the W-phase terminal voltage VW, except that the above-described waveforms appear in different periods from those of the U-phase terminal voltage VU.

When the switching elements 22U, 22V, 22W, 23U, 23V, 23W are opened and closed, a back electromotive force waveform Z is generated at each terminal voltage VU, VV, VW so as to be superimposed at each boundary between the adjacent periods A to F. Each back electromotive force waveform Z includes a certain duration of time when viewed in Fig. 3, however, the back electromotive force waveform Z is actually a transient waveform. Consequently, a starting point and an end point of each energization and non-energization time zone may be detected by recognizing the back electromotive force waveform Z.

On the other hand, the composite voltage Vmix, which is the combination of the induced voltages VUi, VVi, VWi, is generated at the combined point 32 of the position detection circuit 3. The composite voltage Vmix presents a waveform where the back electromotive force waveform Z is superimposed on a waveform in which the induced voltage VUi, VVi, VWi increases or decreases. In the example waveforms shown in Fig. 3, the composite voltage Vmix presents a combination of the waveforms including the increase of the U-phase induced voltage VUi during the period A, the decrease of the W-phase induced voltage VWi during the period B, the increase of the V-phase induced voltage VVi during the period C, the decrease of the U-phase induced voltage VUi during the period D, the increase of the W-phase induced voltage VWi during the period E and the decrease of the V-phase induced voltage VVi during the period F. In addition, the back electromotive force waveform Z is superimposed on the above-described combination of the waveforms, at each boundary between the adjacent periods A to F.

The composite voltage Vmix is inputted to the positive side input terminal + of the comparator 34 of the position detection circuit 3. At the output terminal 35 of the comparator 34, the position signal SX switches between the high level H and the low level L when the waveform of the composite voltage Vmix intersects with the intermediate level value VM. The position detecting portion 37 detects the reference rotational position of the rotor 100 at the timing when the position signal SX switches between the high level H and the low level L, that is, at points P1 to P6 where the waveform of the induced voltages VUi, VVi, VWi intersects with the intermediate level value VM in Fig. 3. Here, that the induced voltage VUi, VVi, VWi coincides with the intermediate level value VM means that an intermediate point of the pair of magnetic poles S, N of the rotor 100 is positioned in front of the armature winding 92, 93, 94. Thus, the points P1 to P6 correspond to the electrical angles of 30, 90, 150, 210, 270 and 330 degrees, respectively. A rotation speed of the rotor 100 may be detected from an interval of times at which the points P1 to P6 occur. In the position detecting portion 37, the back electromotive force waveform Z is masked not to affect the detection.

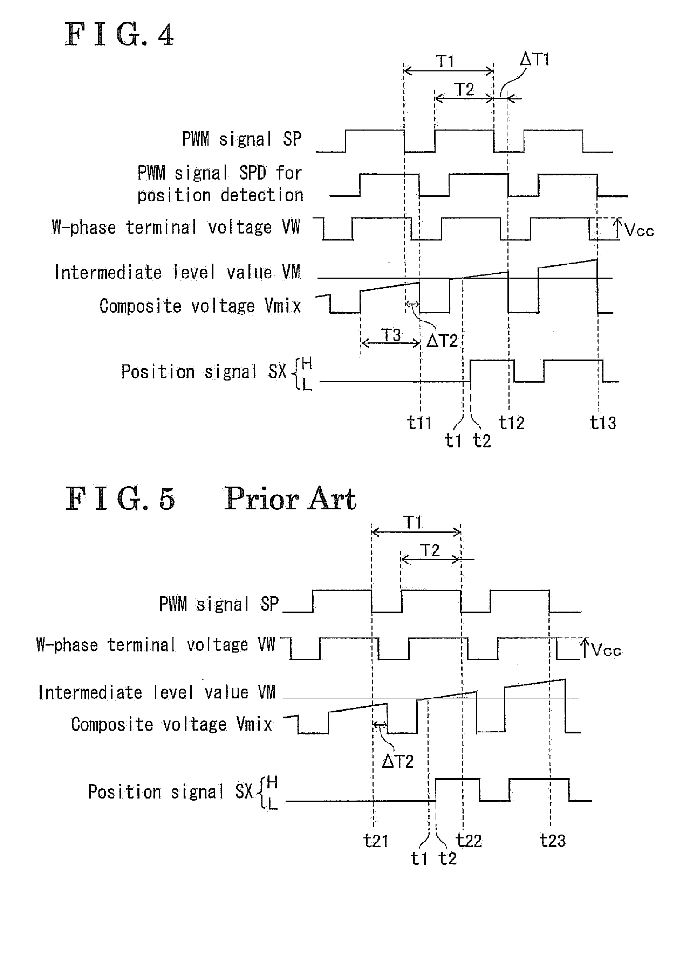

In Fig. 4, the time advances in the horizontal direction from left to right and a time scale is expanded compared to the time scale in Fig. 3. The waveforms shown in Fig. 4 are the PWM signal SP, the PWM signal SPD for position detection, the W-phase terminal voltage VW, the intermediate level value VM, the composite voltage Vmix and the position signal SX from top to bottom.

The PWM signal SP shown in Fig. 4 includes a cycle T1 and an on-duty period T2, and a duty ratio is T2/T1 (On-duty ratio= T2/T1). The PWM signal SP is a positive logic signal, and a rising phase and a falling phase of the PWM signal SP control a rising timing and a falling timing of the power supply voltage Vcc, respectively. A square waveform of the PWM signal SPD for position detection has an identical shape to that of the PWM signal SP and includes an amount of delay ΔT1 relative to the PWM signal SP. Under the PWM control, a square wave which has a slightly delayed on-duty period relative to the PWM signal SP, and oscillates between the power supply voltage Vcc and the zero voltage is generated at the W-phase terminal 95W.

The waveform of the composite voltage Vmix has a similar shape to that of the U-phase induced voltage VUi generated at the U-phase terminal 95U when in the high-impedance state. An on-duty period of the waveform of the composite voltage Vmix is slightly delayed relative to that of the W-phase terminal voltage VW Here, as described above, the amount of delay ΔT1 of the PWM signal SPD for position detection relative to the PWM signal SP is determined so as to substantially coincide with the transmission delay time ΔT2 of the composite voltage Vmix (the U-phase induced voltage VUi) relative to the PWM signal SP (ΔT1≅ΔT2). The waveform of the composite voltage Vmix is generated in an on-duty period T3, which is delayed relative to the PWM signal SP by the transmission delay time ΔT2, and the composite voltage Vmix increases with time. On the other hand, the intermediate level value VM includes a direct current waveform including no temporal variation, that is, the intermediate level value VM does not change with time. When the waveform of the composite voltage Vmix intersects with the intermediate level value VM at a time t1, the position signal SX at the output terminal 35 rises from the low level L to be the high level H at a time t2. At this time, a delay occurring in the comparator 34 between the time t1 and the time t2 is included. After this, the position signal SX remains at the high level H throughout the on-duty period.

In response to the position signal SX, the position detecting portion 37 of the position detection circuit 3 operates at the rising phase of the PWM signal SPD for position detection. In other words, the position detecting portion 37 reads the position signal SX at times t11, t12 and t13 in Fig. 4. The position detecting portion 37 recognizes at the time t11 that the position signal SX is at the low level L and recognizes at the time t12 that the position signal SX has changed to be at the high level H, and thus the position detecting portion 37 detects the reference rotational position of the rotor 100 (30 degrees).

Next, effects of the driving apparatus 1 of the first embodiment will be described through a comparison to a known driving apparatus that does not include the PWM delay circuit 6. According to the known driving apparatus, a PWM signal SP of a PWM generator circuit is transmitted to a position detecting portion, and the position detecting portion operates at a rising phase of the PWM signal SP. The waveforms shown in Fig. 5 correspond to the waveforms shown in Fig. 4 under the identical conditions. The position detecting portion of the known driving apparatus operates at the rising phase of the PWM signal SP, that is, at times t21, t22 and t23, which are earlier than the timings at which the position detecting portion 37 of the first embodiment operate by the amount of delay ΔT1. In case that the duty ratio is high to some degree as shown in Fig. 5, the known detecting portion recognizes at the time t22 that the position signal SX has changed from the low level L to the high level H and detects the reference rotational position of the rotor 100, thereby obtaining a similar effect to the position detecting portion 37 of the first embodiment.

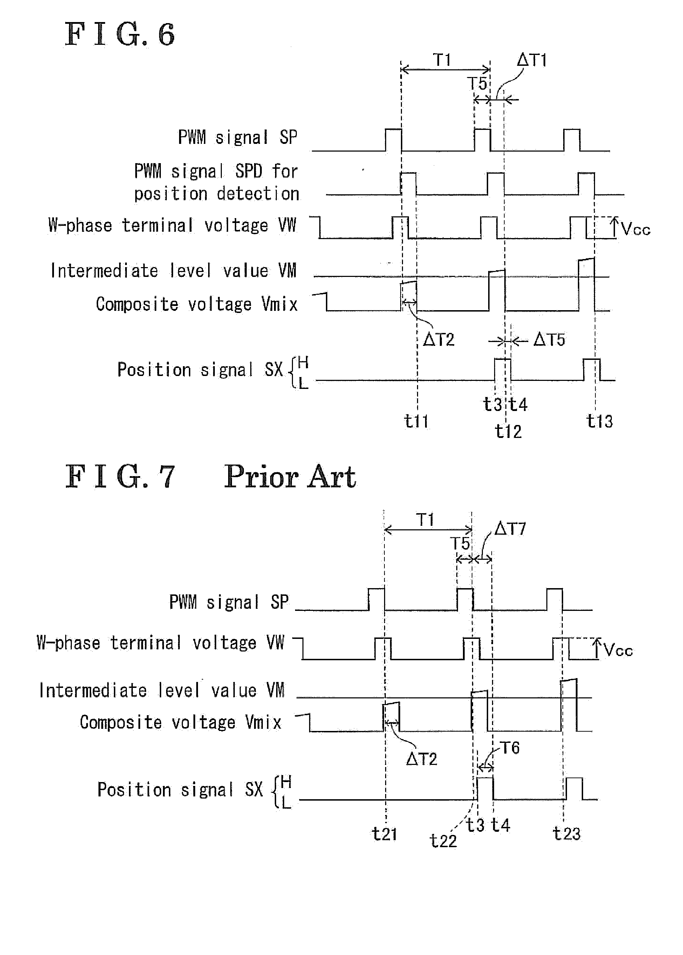

However, in case that the duty ratio is decreased and the rotation speed of the rotor 100 becomes lower, there arise a significant difference between the operations of the position detecting portion 37 of the first embodiment and the known detecting portion. As shown in Fig. 6, an on-duty period of the position signal SX becomes shorter as an on-duty period T5 is decreased. As the on-duty period of the position signal SX becomes shorter, a time t3, at which the position signal SX changes from the low level L to the high level H is delayed. Nevertheless, an amount of delay ΔT5 of a time t4, at which the on-duty period of the position signal SX ends and the waveform thereof falls, relative to the time t12, which is an operation time of the position detecting portion 37, is slight, and the position signal SX rises at the time t3, which is earlier than the operation time t12 of the position detecting portion 37. Accordingly, the position detecting portion 37 recognizes the change of the position signal SX at the time t12, and thus the similar effect to that in Fig. 5 is obtained.

On the other hand, according to the known driving apparatus shown in Fig. 7, the time t3 at which the position signal SX rises is delayed relative to the operation time t22 of the position detecting portion. Accordingly, an entire duration of an on-duty period T6 of the position signal SX is delayed and comes after the operation time t22 which is an operation time of the position detecting portion, and thus there exists substantially no timing at which the position detecting portion reads out the position signal SX. That is, the reference rotational position of the rotor is not detected. Eventually, according to the known driving apparatus, the reference rotational position of the rotor is not detected in case that the on-duty period T6 is shorter than a transmission delay time ΔT7 occurring between the pulse-width modulation signal SP and the position signal SX.

As shown in Fig. 6, according to the first embodiment, the reference rotational position is detected until the on-duty period T5 decreases to coincide with the amount of delay ΔT5. The amount of delay ΔT5 refers to a delayed time inside the comparator 34 and is an extremely short period of time. Thus, according to the first embodiment, the rotational position of the rotor 100 is reliably detected until the duty ratio approaches zero, thereby allowing the rotor 100 to be driven at a lower rotation speed than the known driving apparatus.

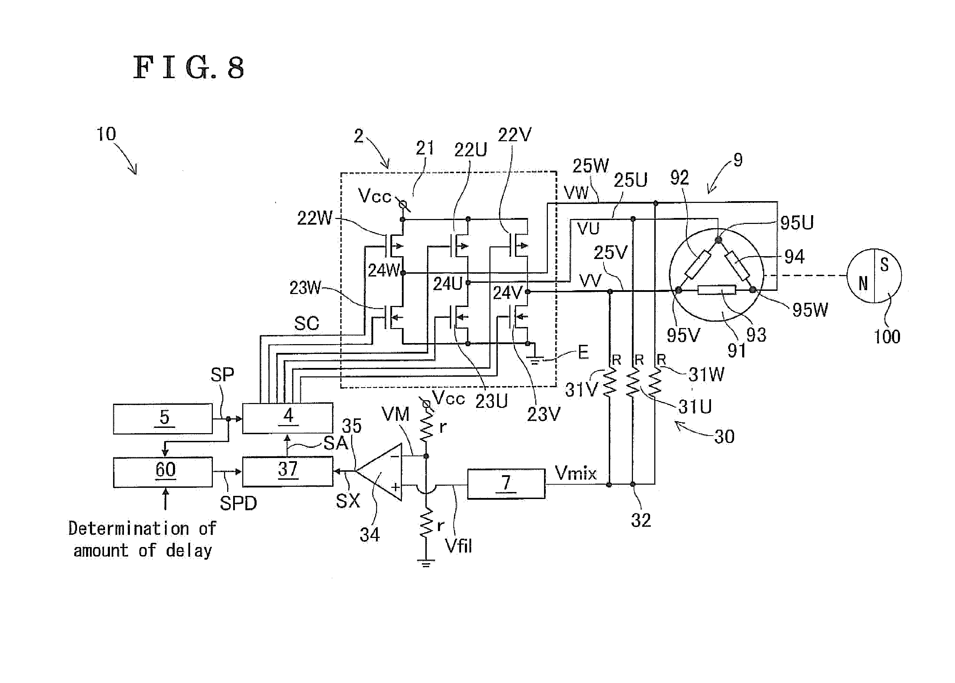

Next, according to a second embodiment, a driving apparatus of a sensorless brushless motor which has a filter portion at an input side of a position detection circuit 30 will be described. As shown in Fig. 8, a driving apparatus 10 of a sensorless brushless motor of the second embodiment includes a filter portion 7 provided between the combined point 32 of the position detection circuit 30 and the comparator 34. Configuration of other portions of the second embodiment is identical to that of the first embodiment.

The filter portion 7 receives, as an input, the composite voltage Vmix generated at the combined point 32 and outputs a filter output voltage Vfil to the positive side input terminal + of the comparator 34. The filter portion 7 is a low-pass filter having a function to remove noise and ripples included in the composite voltage Vmix. The filter output voltage Vfil includes a delay time relative to the composite voltage Vmix. In a similar manner to that described in the first embodiment, the intermediate level value VM (=Vcc/2) is inputted as the reference voltage to the negative side input terminal - of the comparator 34. The comparator 34 compares the magnitude of the filter output voltage Vfil and the magnitude of the intermediate level value VM.

An amount of delay in a PWM delay circuit 60 is set in consideration of a transmission delay time in the filter portion 7. In other words, the amount of delay in the PWM delay circuit 60 refers to an amount obtained by adding the transmission delay time of the induced voltages VUi, VVi, VWi (=the composite voltage Vmix) relative to the PWM signal SP to the transmission delay time in the filter portion 7.

In the second embodiment, the filter output voltage Vfil inputted to the positive side input terminal + of the comparator 34 and the position signal SX at the output terminal 35 are delayed to a greater extent than those in the first embodiment. Corresponding to the above-described delay of the filter output voltage Vfil and the position signal SX, the amount of delay, in the PWM delay circuit 60, of the PWM signal SPD for position detection is greater than that of the first embodiment. Thus, in the second embodiment, similar operation and effects to those of the first embodiment, which were described with the reference to Figs. 4 and 6, are obtained.

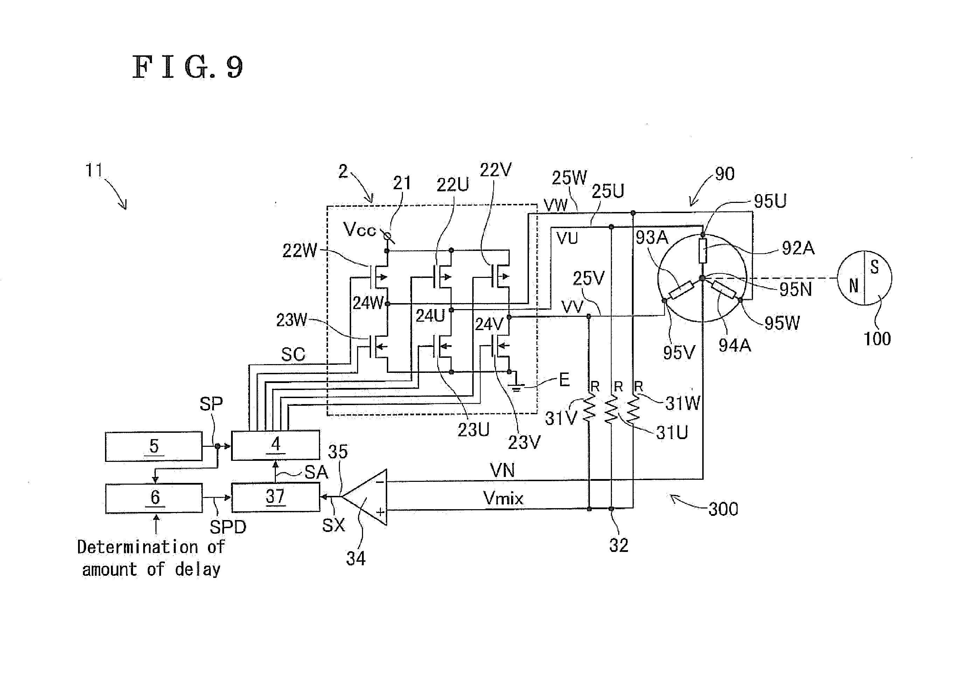

Next, a driving apparatus of a sensorless brushless motor according to a third embodiment will be described, where a method for connecting three phase armature windings 92A, 93A, 94A to one another, and a reference voltage of the comparator 34 of a position detection circuit 300 are different from those of the first or second embodiment. As shown in Fig. 9, according to the third embodiment, the three phase armature windings 92A, 93A, 94A are connected in the Y-connection. Specifically, the U-phase armature winding 92A is connected between the U-phase terminal 95U and a neutral point 95N, the V-phase armature winding 93A is connected between the V-phase terminal 95V and the neutral point 95N, and the W-phase armature winding 94A is connected between the W-phase terminal 95W and the neutral point 95N. The neutral point 95N is pulled outside the motor 90 and is connected to the negative side input terminal - of the comparator 34. That is, a neutral point voltage VN of the Y-connection of the armature windings serves as the reference voltage of the comparator 34. Configuration of other portions of the third embodiment is identical to that of the first embodiment.

In the third embodiment, for example, when the U-phase terminal 95U is in the high-impedance state, the V-phase terminal 95V is tied to the zero voltage, and the W-phase terminal 95W is in the PWM control state, the power supply voltage Vcc is supplied between the W-phase terminal 95W and the V-phase terminal 95V. In other words, the W-phase armature winding 94A and the V-phase armature winding 93A are energized, and the neutral point voltage VN generated at the neutral point 95N coincides with half the value of the power supply voltage Vcc, that is, the intermediate level value VM. Accordingly, a driving apparatus 11 of the third embodiment operates substantially similarly to that of the driving apparatus 1 of the first embodiment, and effects similar to those of the first embodiment are obtained, and therefore detailed description will be omitted.

In addition, the configuration of the driving apparatus 11 of the third embodiment shown in Fig. 9 may include a filter portion similar to the filter portion 7 of the second embodiment. In this case, the amount of delay of the PWM signal SPD for position detection may be set in consideration of the transmission delay time in the filter portion.

The first to third embodiments may be applied in combination with an inverter control circuit controlling an angle of advance. In other words, the inverter control circuit 4 may be configured to transmit the energization control signal SC which includes a consideration of the angle of advance that compensates the transmission delay time in the inverter circuit 2 and in the position detection circuit 3, 30, 300, while the energization control signal SC is based on the energization time zone and the PWM signal SP. By adjusting the angle of advance, a timing of the energization time zone may be appropriately regulated and thus an adequate efficiency of the motor may be obtained. Further, the first to third embodiments may be applied to a configuration that includes an inverter circuit in which the energization time zone is controlled to exceed the electrical angle of 120 degrees and to be overlapped with plural phases. Other variations, modifications and applications of the first to third embodiments may be made.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A driving apparatus (1, 10, 11) of a sensorless brushless motor (9, 90), comprising:
an inverter circuit (2) supplying a power supply voltage (Vcc), of which duty ratio is variable by a pulse-width modulation (PWM) method, to three phase terminals (95U, 95V, 95W) of three phase armature windings (92, 93, 94) of the sensorless brushless motor (9, 90) provided with a stator (91) including the three phase armature windings (92, 93, 94) and with a rotor (100) including a pair of magnetic poles (S, N);
a PWM generator circuit (5) generating a pulse-width modulation signal (SP) including a duty ratio corresponding to a commanded duty ratio or corresponding to a commanded number of rotations of the motor (9, 90);
a position detection circuit (3, 30, 300) operating at a particular phase of the pulse-width modulation signal (SP), detecting an induced voltage (VUi, VVi, VWi) induced at the terminal (95U, 95V, 95W) that is in a non-energization time zone in which the power supply voltage (Vcc) is not supplied from the inverter circuit (2) to the terminal (95U, 95V, 95W), and detecting a rotational position of the rotor (100) on the basis of the detected induced voltage (VUi, VVi, VWi);
an inverter control circuit (4) determining an energization time zone in which the power supply voltage (Vcc) is supplied to the terminal (95U, 95V, 95W) of each phase on the basis of the rotational position of the rotor (100) which is detected by the position detection circuit (3, 30, 300), and transmitting an energization control signal (SC) which is on the basis of the energization time zone and of the pulse-width modulation signal (SP) to the inverter circuit (2); and
a PWM delay circuit (6, 60) generating a pulse-width modulation signal (SPD) for position detection by delaying the pulse-width modulation signal (SP) on the basis of a transmission delay time (ΔT2) in the inverter control circuit (4) and in the inverter circuit (2), wherein
the position detection circuit (3, 30, 300) operates at a particular phase of the pulse-width modulation signal (SPD) for position detection.

2. The driving apparatus (1, 10, 11) of the sensorless brushless motor (9) according to claim 1, wherein an amount of delay (ΔT1) of the pulse-width modulation signal (SPD) for position detection in the PWM delay circuit (6, 60) coincides with the transmission delay time (ΔT2) of the induced voltage (VUi, VVi, VWi) relative to the pulse-width modulation signal (SP).

3. The driving apparatus (10) of the sensorless brushless motor (9) according to either claim 1 or 2, wherein
the position detection circuit (30) includes a filter portion (7) at an input side of the position detection circuit (30), to which the induced voltage (VUi, VVi, VWi) is inputted, and
the PWM delay circuit (60) generates the pulse-width modulation signal (SPD) for position detection which includes a consideration of a transmission delay time at the filter portion (7).

4. The driving apparatus (1, 10, 11) of the sensorless brushless motor (9, 90) according to any one of claims 1 through 3, wherein the amount of delay (ΔT1) of the pulse-width modulation signal (SPD) for position detection in the PWM delay circuit (6, 60) is set to be variable.

5. The driving apparatus (1, 10, 11) of the sensorless brushless motor (9, 90) according to any one of claims 1 through 4, wherein
a falling phase of the pulse-width modulation signal (SP) of the PWM generator circuit (5) controls a falling timing of the power supply voltage (Vcc), and
the position detection circuit (3, 30, 300) operates at a falling phase of the pulse-width modulation signal (SPD) for position detection.

6. The driving apparatus (1, 10, 11) of the sensorless brushless motor (9, 90) according to any one of claims 1 through 5, wherein the inverter control circuit (4) transmits, to the inverter circuit (2), the energization control signal (SC) including a consideration of an angle of advance for compensating a transmission delay time in the inverter circuit (2) and in the position detection circuit (3) in addition to a consideration of the energization time zone and the pulse-width modulation signal (SP).

7. The driving apparatus (1, 10, 11) of the sensorless brushless motor (9, 90) according to any one of claims 1 through 6, wherein a square waveform of the pulse-width modulation signal (SPD) for position detection has an identical shape to a shape of a waveform of the pulse-width modulation signal (SP) and includes the amount of delay (ΔT1) relative to the pulse-width modulation signal (SP).

8. The driving apparatus (10) of the sensorless brushless motor (9) according to claim 3, wherein the amount of delay (ΔT1) is an amount obtained by adding the transmission delay time (ΔT2) of the induced voltage (VUi, VVi, VWi) relative to the pulse-width modulation signal (SP) to the transmission delay time in the filter portion (7).

9. The driving apparatus (10) of the sensorless brushless motor (9) according to either claim 3 or 8, wherein the filter portion (7) is a low-pass filter.

10. The driving apparatus (1, 10, 11) of the sensorless brushless motor (9, 90) according to any one of claims 1 through 9, wherein the three phase armature windings (92, 93, 94) are connected to one another in a delta connection.

11. The driving apparatus (1, 10, 11) of the sensorless brushless motor (9, 90) according to any one of claims 1 through 9, wherein the three phase armature windings (92, 93, 94) are connected to one another in a Y-connection.
